# EUROPEAN PATENT APPLICATION

(11) **EP 1 197 689 A2**
(43) Date of publication of application: **17.04.2002**
(21) Application number: 01308490.0
(22) Date of filing: 04.10.2001
(51) Int. Cl.: F16J 15/08

(54) **Metal gasket**

(30) Priority: 10.10.2000 JP 2000309041
(71) Applicant: NIPPON GASKET CO., LTD., Higashiosaka-shi, Osaka fu (JP)
(72) Inventor: Ogaeri, Tomoyoshi, c/o Nippon Gasket Company Ltd., Higashiosaka-shi, Osaka (JP); Naoki, II, c/o Nippon Gasket Company Ltd., Higashiosaka-shi, Osaka (JP); Kida, Kazuhiro, c/o Nippon Gasket Company Ltd., Higashiosaka-shi, Osaka (JP); Teranishi, Minoru, c/o Nippon Gasket Company Ltd., Higashiosaka-shi, Osaka (JP); Yoshijima, Kazuya, c/o Toyota Jidosha K.K., Toyota-shi, Aichi (JP)
(74) Representative: Jenkins, Peter David

(57) **Abstract**

Occurrence of cracking in a metal plate serving as a constituent plate is prevented by improving heat extraction and cooling characteristics, for instance, in the peripheries of cylinder bores (6) which encounter a high-temperature fluid. To this end, a stopper plate (5), which has bore openings (6) and either or both surfaces of which are coated with a sealing coating material (16), is provided with sealing coating material lacking portions formed in the vicinity of the bore openings in one surface thereof. The sealing coating material lacking portions are for speeding up extraction of heat from the peripheries of the bore openings (6).

## Description

The present invention relates to a metal gasket for use as a cylinder head gasket for automotive engines, a manifold gasket or the like, such a metal gasket comprising at least one metal plate either or both surfaces of which are coated with a sealing coating material.

In known metal gaskets of the above type, it is essential that either or both surfaces of a metal plate (metal plates) is coated with a micro-sealing material (e.g., resin and rubber) having a thickness of tens of µm in order to compensate for the irregularity (unevenness) of the sealing contact surfaces of the cylinder head and the cylinder block caused by machining.

In cases where an intermediate plate is interposed between two bead plates for instance, both surfaces of the intermediate plate are usually uncoated with a micro-sealing coating material, and therefore if the sides of the bead plates in contact with the intermediate plate are coated with a micro-sealing material, this helps the gasket to provide a seal in the periphery regions of the bore openings. For this reason, a micro-sealing coating material is applied to both surfaces of the bead plates in many cases.

As a prior art technique associated with the present invention, there is known Japanese Patent Publication (KOKAI) Gazette No. 64-73156 (1989). According to the technique disclosed in this publication, the coating layer in the regions surrounding coolant openings is peeled off with the intention of preventing the coolant channel from being stuffed with the micro-sealing material which has been peeled from the gasket portion exposed to the coolant openings.

There is known another prior art technique disclosed in Japanese Patent Publication (KOKAI) No. 10-196790 (1998). The technique disclosed in this publication is as follows. In the broad parts of the folded-back portions located in the peripheries of the cylinder bores, only the outer circumferential side is coated with a micro-sealing material while the inner circumferential side being left uncoated, in order that local surface pressure is increased without increasing the area presented to clamping force pressure.

Recent high-performance engines and, particularly, diesel engines are known to be liable to cracking which occurs in an inner circumferential direction in the vicinity of the bead foot portions of the bead plates or in the horizontal portions located on the side closer to the bore openings than the beads, so that the gasket fails in functioning properly. In addition, where folded-back stoppers or grommets are provided, cracking is likely to occur in the folded-back portions. This is attributable to repetitive stress and thermal stress which are imposed on the gasket by the expansion and contraction of the sealing contact surfaces during operation of the engine and further to combined actions including corrosion attacks caused by sulfur inclusions etc. The respective degrees of these adverse effects are difficult to be clearly grasped, but it is supposed that, among them, the influence of thermal stress becomes increasingly strong with higher engine performance.

The latest trend of cylinder head gaskets and exhaust manifold gaskets is to employ stainless steel or high nickel steel as the material of the bead plates. Particularly, stainless steel has lower coefficient of thermal conductivity than those of aluminum and cast iron which are constituents of an engine. In addition, it is conceivable that the heat insulating effect of coating of both surfaces by use of the above-mentioned micro-sealing material further aggravates heat extraction from the bore periphery regions. This further accelerates occurrence of cracking such as described above.

As discussed earlier, coating with the micro-sealing material, which has been regarded as the necessity for providing a seal in the bore periphery regions gives an adverse effect, on the contrary, upon the long use and reliability of the gasket under certain conditions. Therefore, there have arisen a need for a review of the significance of the use of the conventional micro-sealing material particularly in the bore periphery regions, the micro-sealing material having been used in view of only sealing properties and surface pressure adjustment.

Although the techniques of the above publications cited herein as prior art associated with the present invention are similar to the invention in the respect that the gasket has some portions which are not coated with the micro-sealing material, they do not disclose nor discuss the object of the invention described earlier, but are directed to techniques utterly different from the invention in terms of objects, functions and effects.

The invention has been made in consideration of the above problems and a prime object of the invention is therefore to provide a metal gasket in which occurrence of cracking of a metal constituent plate is prevented by improving the heat extraction and cooling characteristics of regions which encounter a high temperature fluid such as the periphery regions of cylinder bores, so that improved durability and reliability are ensured.

The above aim can be achieved by a metal gasket according to the invention, which comprises at least one metal plate including bore openings, either or both surfaces of the metal plate being coated with a coating material for sealing,
wherein sealing coating material lacking portions are provided in the vicinity of the bore openings in at least one surface of the metal plate for the purpose of speeding up extraction of heat from the peripheries of the bore openings.

According to the invention, the provision of the sealing coating material lacking portions in the bore periphery regions allows heat accumulated in the bore periphery regions of the metal gasket to be guided to the cylinder head or cylinder block side, thereby speeding up heat extraction and cooling so that occurrence of cracking is prevented in the sealing coating material lacking portions as well as in the folded-back portions close to the lacking portions. Thus, the effect of entirely cooling the higher-temperature parts of the gasket can be also expected, which leads to achievement of a highly durable and reliable gasket. In cases where the gasket has a structure including stopper sections, the spring constant of the stopper sections can be increased by removal of the coating material and the relative displacement of the gasket can be restrained, so that the durability and reliability of the gasket can be further increased. The metal gasket of the invention is particularly suited for use as a cylinder head gasket for diesel engines in which the peripheries of the cylinder bores become higher in temperature.

In the invention, the sealing coating material lacking portions are provided on either or both of a side confronting the cylinder block and a side confronting the cylinder head.

According to the invention, it is preferable that the sealing coating material lacking portions are, in principle, provided for all bore openings, each extending around the entire circumference of a bore opening. However, in the case of multiple cylinder engines, which of the bore periphery regions is provided with a sealing coating material lacking portion can be arbitrarily determined and therefore some bore periphery regions may have no lacking portion. It is also arbitrary to determine whether the periphery region of a bore opening is entirely or partly provided with a sealing coating material lacking portion. Further, some bore periphery regions may be entirely provided with a lacking portion while others being partly provided with a lacking portion. It is also possible to arbitrarily vary the width of the sealing coating material lacking portion around each bore opening for the purpose of attaining cracking preventing effect and adjusting sealing surface pressure. In addition, the width of the sealing coating material lacking portions on the cylinder head side may be different from that of the sealing coating material lacking portions on the cylinder block side.

The boundary between each sealing coating material lacking portion and a sealing coating material existing region is not necessarily concentric, in plane, with their associated bore opening but may be in the form of a wave line. Further, it is arbitrary to combine a sealing coating material lacking portion with a coating material lacking portion around one or more coolant openings where the coating material is partly absent.

Prior to coating of the metal plate with the coating material for sealing, a surface of the metal plate may undergo known surface treatment in order to prevent corrosion, gnawing and others.

The sealing coating material lacking portions of the invention may be formed by uncoating or by partly peeling the coating material off after coating has been done.

Embodiments of the present invention will now be described by way of example only, with reference to the accompanying drawings, in which:-
FIGURE 1 is a partial plan view of a metal gasket according to a first embodiment of the invention.
FIGURE 2 is a partial cross sectional view taken along line A-A of FIGURE 1.
FIGURE 3 is a partial cross sectional view of a metal gasket according to a second embodiment of the invention.
FIGURE 4 is a partial cross sectional view of a metal gasket according to a third embodiment of the invention.
FIGURE 5 is a partial cross sectional view of a metal gasket according to a fourth embodiment of the invention.
FIGURE 6 is a partial cross sectional view of a metal gasket according to a fifth embodiment of the invention.
FIGURE 7 is a view showing an example in which adjacent beads meet each other.

Referring now to the accompanying drawings, metal gaskets will be described according to preferred embodiments of the invention.

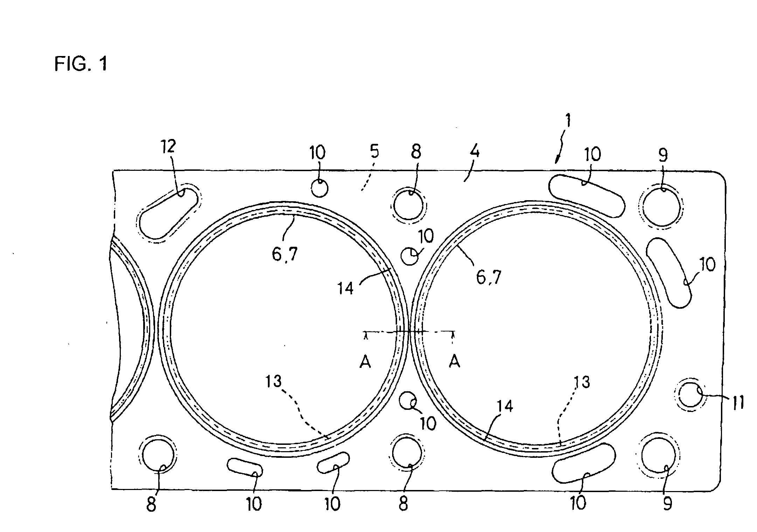

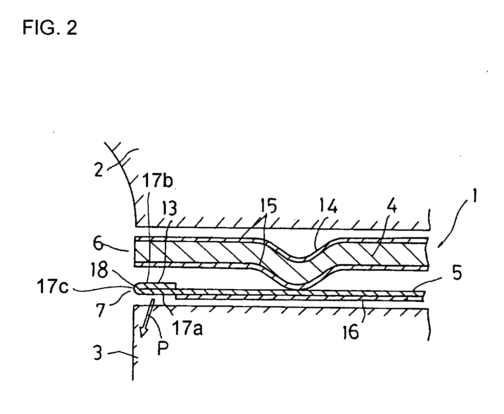

FIGURE 1 shows a partial plan view of a metal gasket according to a first embodiment of the invention and FIGURE 2 shows a partial cross sectional view taken along line A-A of FIGURE 1.

A metal gasket 1 constructed according to the first embodiment is used for providing a seal between the opposed contact surfaces of a cylinder head 2 and cylinder block 3 of a multiple cylinder engine. This metal gasket 1 is formed by lamination of (i) a bead plate 4 made from a stainless spring steel plate having a specified thickness and (ii) a stopper plate 5 made from a stainless spring steel plate having a specified thickness or a metal plate having characteristics equivalent to those of a stainless spring steel plate.

The bead plate 4 has bore openings 6 corresponding to a plurality of cylinder bores which are formed side by side on the cylinder block 3. Similarly, bore openings 7 are formed on the stopper plate 5. The bead plate 4 and the stopper plate 5 are pierced to form bolt openings 8, bolt and knock openings 9, water openings 10, oil openings 11 and oil and bolt openings 12.

The stopper plate 5 has folded-back portions 13 which are formed by folding the periphery of each bore opening 7 back to the bead plate 4 side through 180 degrees. The bead plate 4 has annular beads 14 each consisting of a full bead positioned outside a folded-back portion 13 of the stopper plate 5. Accordingly, a specified surface pressure is obtained in the periphery regions of the bore openings while a specified surface pressure balance is maintained between the bore periphery regions and other areas, by means of the bead plate 4 and the stopper plate 5 thus formed.

Formed on both surfaces of the bead plate 4 is a coating material layer 15 made from a micro-sealing material such as resin or rubber. On the stopper plate 5, a coating material layer 16 is formed on only one side thereof, the side being in contact with the cylinder block 3. After formation of the coating material layer 16, only the coating material within predetermined regions around the periphery region of each bore opening 7 is removed by water jetting, thereby to form coating material removed portions (i.e., coating material lacking portions) 17a, 17b and 17c.

The metal gasket 1 of the present embodiment is thus formed and therefore, when it is inserted between the cylinder head 2 and the cylinder block 3 and clamped with bolts, the coating material removed portions 17a of the stopper plate 5 are brought into direct contact with the contact surface of the cylinder block 3 during operation of the engine, so that a heat flow and heat dissipation are more unlikely to be interrupted, compared to the case where the coating material removed portions 17a are not formed. As a result, a heat flow is guided in the direction of arrow P to the inner surface of the cylinder block 3, the inner surface decreasing in temperature during fuel injection, so that heat is extracted from the contact leading end of the coating material removed portion 17a and subsequently, the temperature of the entire gasket leading end is maintained at low temperature. In this way, occurrence of cracking is prevented at a bent portion 18 located in the leading end of the stopper plate 5.

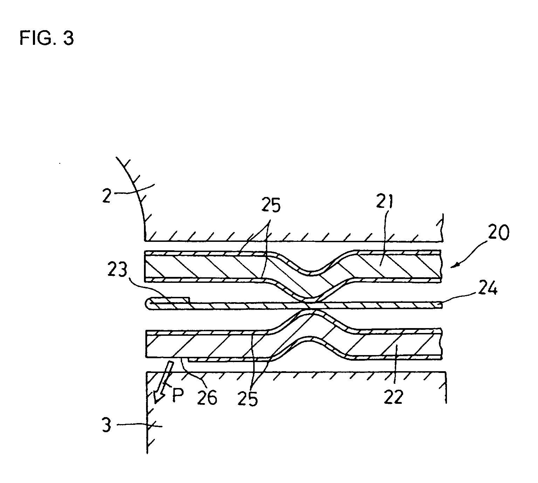

FIGURE 3 shows a partial cross sectional view of a metal gasket constructed according to a second embodiment of the invention.

According to the second embodiment, a metal gasket 20 is designed to have two bead plates 21, 22 between which an intermediate plate 24 having folded-back portions 23 in bore periphery regions is interposed.

The surfaces of the intermediate plate 24 are not provided with a coating material layer. On the other hand, both surfaces of the bead plates 21, 22 are respectively provided with a coating material layer 25. On the contact surface of the bead plate 22 in contact with the cylinder block 3, a coating material removed portion 26 is formed by removing the coating material from only a predetermined region in each bore periphery region by means of water jetting after formation of the coating material layer 25.

With this arrangement, the coating material removed portions 26 of the bead plate 22 are brought into direct contact with the contact surface of the cylinder block 3 during operation of the engine similarly to the first embodiment, whereby heat extraction and cooling in the direction of arrow P is enhanced, preventing occurrence of cracking in the coating material removed portions 26 of the bead plate 22.

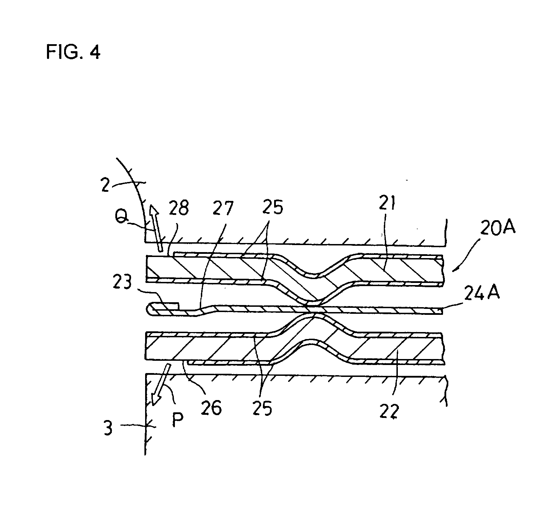

FIGURE 4 shows a partial cross sectional view of a metal gasket constructed according to a third embodiment of the invention.

In a metal gasket 20A according to the fourth embodiment, an intermediate plate 24A has a bent portion 27 in the vicinity of each bore opening. The contact surface of a bead plate 21 in contact with the cylinder head 2 has coating material removed portions 28 formed thereon. The width of the coating material removed portions 26 on the side of the cylinder block 3 is wider than the width of the coating material removed portions 28 on the side of the cylinder head 2. Basically, the structure of the third embodiment does not differ from that of the second embodiment except the above points and therefore the parts common to these embodiments are designated by the same reference numerals in the drawings and a detailed description thereof is omitted herein.

In the third embodiment, the coating material removed portions 26 of the bead plate 22 are in direct contact with the contact surface of the cylinder block 3 and in addition, the coating material removed portions 28 of the bead plate 21 are in direct contact with the contact surface of the cylinder head 2. Accordingly, heat extraction and cooling in the directions of arrow P and arrow Q is enhanced so that occurrence of cracking in the coating material removed portions 28, 26 of the bead plates 21, 22 can be prevented.

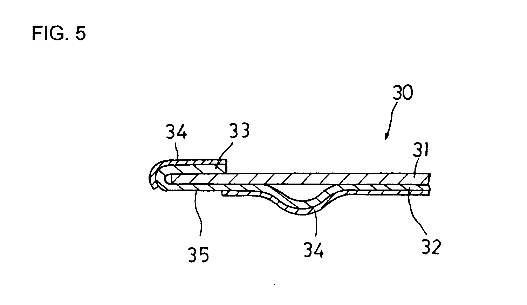

FIGURE 5 shows a partial cross sectional view of a metal gasket constructed according to a fourth embodiment of the invention.

The metal gasket 30 of the fourth embodiment is composed of an adjuster plate 31 and a bead plate 32, and each bore opening is formed such that a folded-back portion 33 formed on an edge of the bead plate 32 holds the edge of the adjuster plate 31 in an enclosing manner. In this case, a coating material layer 34 is formed on one surface of the bead plate 32 and a coating material removed portion 35 is formed on the contact surface of the bead plate 32 in contact with the cylinder block 3 by removing the coating material from only a predetermined region in each bore periphery region by means of water jetting etc. after formation of the coating material layer 34.

In the fourth embodiment, the coating material removed portions 35 of the bead plate 32 are also brought into direct contact with the contact surface of the cylinder block 3 during operation of the engine, so that heat extraction and cooling is enhanced on this contact surface, preventing occurrence of cracking.

It is possible to modify the fourth embodiment such that another bead plate is laminated on the side opposite to the bead plate 32 and coating material removed portions are properly formed in bore periphery regions on this bead plate.

Although the first, second and fourth embodiments have been described with the coating material removed portions formed on the cylinder block side, they may be formed on the cylinder head side. It is also possible to form the coating material removed portions on both the cylinder block side and the cylinder head side.

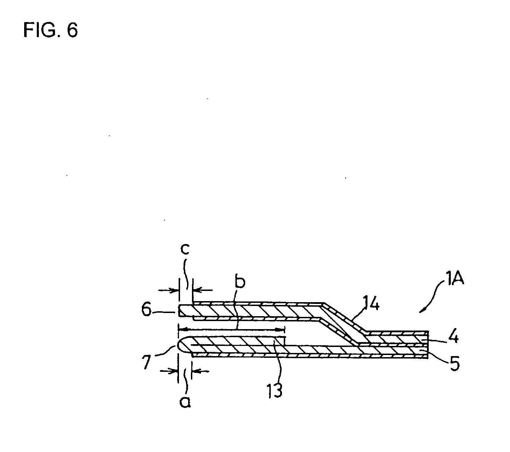

FIGURE 6 shows a partial cross sectional view of a metal gasket constructed according to a fifth embodiment of the invention.

The plate structure of the metal gasket 1A of the fifth embodiment is the same as that of the first embodiment shown in FIGURE 2. Therefore, the parts common to these embodiments are designated by the same reference numerals in the drawings and a detailed description thereof is omitted herein.

The stopper plate 5 of the fifth embodiment has coating material removed portions, each of which extends over a part (having a width a and close to its associated bore opening 7) of the cylinder block side of the stopper plate 5 and over the entire part (having a width b) of the bead plate 4 side (i.e., the upper side in FIGURE 6) of the folded-back portion 13. Of course, the coating material removed portion covers the edge of the folded-back portion 13 confronting the bore opening 7, like the case of FIGURE 2. The bead plate 4 also has a coating material removed portion in the vicinity of each bore opening 6, which covers parts (having a width c) of both surfaces of the bead plate 4. In this example, the width a is substantially equal to the width c and these widths a, c are preferably about 0.2 to 0.3 mm from the edge of each bore opening.

The following materials are desirably used for forming the above-described metal plates. For the bead plate 4, high-strength dual-phase stainless steel is preferable, which is composed of a ferrite phase and a martensite phase and has undergone structure control by heat treatment. Examples of the material of the stopper plate 5 include SUS304 and austenitic stainless steel having high manganese content to which nitrogen or the like is further added.

With this arrangement, heat extraction toward both the cylinder head side and the cylinder block side can be speeded up. In reality, there remains a minute space in the leading end of each folded-back portion 13 on the side of the bore opening 7 and substantially no surface pressure develops in this space. This phenomenon can be utilized for facilitating the adjustment of lowering surface pressure imposed on the bore periphery regions at the time of clamping the gasket. Further, since there exists no coating layer on the bead plate 4 side of the folded-back portions 13, a drop in torque can be lessened when the gasket is in use.

In the foregoing embodiments, only the heat extraction and cooling effect taking place in the contact surfaces of the coating material removed portions has been described as the effect achieved by the provision of the coating material removed portions. The provision of the removed portions, however, has another effect. Concretely, where the coating material removed portions are provided in the upper and lower parts as described in the third embodiment, the spring constant of the folded-back stopper portions can be improved and the relative displacement of the gasket can be reduced. By virtue of both of the above effects, a gasket more improved in durability and reliability can be achieved.

The technical concept of the invention is applied not only to the gaskets described in the above-described embodiments but also to single-layered metal gaskets in which a folded-back portion is provided in each bore periphery region with a bead attached to the outside thereof. It is also possible to apply the inventive concept to quadruple-layered, laminated metal gaskets in which two intermediate constituent plates are interposed between two bead plates.

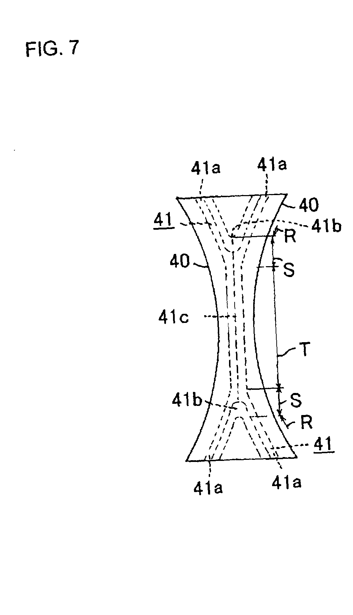

While the foregoing embodiments have been described in the context of gaskets in which the beads of every two adjacent bore openings do not meet each other, the invention is applicable to gaskets in which adjacent beads meet each other as shown in FIGURE 7. In the example shown in FIGURE 7, beads 41 are respectively formed so as to extend along the peripheries of their associated bore openings 40. As seen from FIGURE 7, each bead 41 is composed of (i) a single bead section 41a located in a region R which excludes the region located between the bore openings 40; (ii) a meeting bead section 41b located in a region S where the single bead section 41a of one bead 41 meets the single bead section 41a of the adjacent bead 41; and (iii) a common bead section 41c consisting of a combined bead line and located in a region T between the adjacent bore openings 40.

In the foregoing embodiments, the direction in which heat accumulated, for instance, in the bore periphery regions of the gasket is guided for heat extraction and cooling should not be along the gasket surface but should be toward the cylinder head side or the cylinder block side. In this case, it is particularly important that a heat flow is guided toward the inner surfaces of the cylinder head and the cylinder block which decrease in temperature when fuel for the engine is injected; heat extraction is started from the contact leading end faces of the coating material removed portions of the gasket; and then, the temperature of the entire gasket leading end is kept to be as low as possible.

Taking the above conditions into the account, the width of the coating material to be removed is up to about 2 mm from the edge of a bore opening in many cases particularly where a bead plate has a narrow space between bore openings. The region of about 0.5 to 1.5 mm from the edge of a bore opening is very important. Accordingly, the width of the coating material to be removed is, more preferably, 0.2 to 1.2 mm. In the case of a stopper plate having folded-back portions or a constituent plate having grommets, it is possible to set the width of the coating material to be removed to several mm. However, the distance between bore openings and the presence or absence of the bead meeting part between bore openings in design should be considered while ensuring desired surface pressure and desired surface pressure balance, and therefore, prior check and adjustment becomes necessary for determining the removal width of the coating material.

Preferably, the constituent plate provided with the coating material removed portions is a bead plate. If it is found in a preliminary test that cracking is likely to occur in a certain part in either surface of the constituent plate, the coating material in the sealing contact surface of this part should be removed. If cracking is likely to occur in both surfaces, the coating material applied to these surfaces should be removed, of course.

In the foregoing embodiments, the coating material lacking portions are formed by partially removing (peeling off) the coating material by water jetting or the like after coating. It is also possible to form the coating material lacking portions by applying no coating material to parts of the constituent plate.

## Claims

1. A metal gasket which comprises at least one metal plate including bore openings, either or both surfaces of the metal plate being coated with a coating material for sealing,
wherein sealing coating material lacking portions are provided in the vicinity of the bore openings in at least one surface of the metal plate for the purpose of speeding up extraction of heat from the peripheries of the bore openings.

2. A metal gasket according to claim 1, wherein said sealing coating material lacking portions are provided on either or both of a side confronting a cylinder block and a side confronting a cylinder head.

3. A metal gasket according to claim 2, wherein where said sealing coating material lacking portions are provided on both of the sides confronting the cylinder block and confronting the cylinder head, the width of the sealing coating material lacking portions on the cylinder block side is different from that of the sealing coating material lacking portions on the cylinder head side.

4. A metal gasket according to any one of claims 1 to 3,
wherein the sealing coating material lacking portions are formed by applying no coating material.

5. A metal gasket according to any one of claims 1 to 3,
wherein the sealing coating material lacking portions are formed by partially peeling off a coating material after coating.
